(19) Europäisches Patentamt
European Patent Office
Office européen des brevets

(11) **EP 1 853 437 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **06706011.1**

(22) Anmeldetag: **24.02.2006**

(51) Int Cl.:
**B60B 27/00** *(2006.01)*

(86) Internationale Anmeldenummer:
**PCT/DE2006/000342**

(87) Internationale Veröffentlichungsnummer:
**WO 2006/092121 (08.09.2006 Gazette 2006/36)**

(54) **RADLAGERANORDNUNG MIT STIRNVERZAHNUNG**

WHEEL BEARING ARRANGEMENT WITH FRONT TOOTHING

ENSEMBLE ROULEMENT DE ROUE A DENTURE DROITE

(84) Benannte Vertragsstaaten:
**FR GB IT**

(30) Priorität: **04.03.2005 DE 102005009935**

(43) Veröffentlichungstag der Anmeldung:
**14.11.2007 Patentblatt 2007/46**

(73) Patentinhaber: **Schaeffler Technologies GmbH & Co. KG**
**91074 Herzogenaurach (DE)**

(72) Erfinder:
• **LANGER, Roland**
**97523 Schwanfeld (DE)**
• **NIEBLING, Peter**
**97688 Bad Kissingen (DE)**
• **MASUR, Ernst**
**97508 Untereuerheim (DE)**

(56) Entgegenhaltungen:
**DE-A1- 3 604 630     DE-A1- 3 636 243**
**DE-C1- 3 116 720**

**Beschreibung**

**Gebiet der Erfindung**

Die Erfindung betrifft eine Radlageranordnung mit wenigstens zwei Reihen Wälzkörpern zur Lagerung einer mit der Radlagerung durch ein Antriebselement antreibbaren Radnabe, wobei die Radnabe mit dem Antriebselement verbunden ist, und wobei die Radnabe und das Antriebselement mittels Paarung von miteinander korrespondierenden Stirnverzahnungen formschlüssig ineinander greifen.

**Hintergrund der Erfindung**

Eine derartige Radlageranordnung und die Funktion der Verzahnung sind in DE 31 16 720 C1 ausführlich beschrieben. Die Stirnverzahnung lässt sich beispielsweise durch spanlose Fertigung einbringen. Die Verbindung ist Bauraum sparend und lässt die Übertragung von relativ hohen Momenten zu, denen jedoch aufgrund der Abmessungen der Radlageranordnungen Grenzen gesetzt sind.

Außerdem haben die bekannten Radlagereinheiten ein relativ hohes Gewicht und eine relativ geringe Lagersteifigkeit. Die Lagersteifigkeit ist dabei der Widerstand, den die Einheit gegen durch Belastungen hervorgerufene elastische Auslenkungen aufbringt. Aus der Lagersteifigkeit resultier eine Kippsteifigkeit, die sich aus dem Verhältnis von Momenten aus Belastungen zu dem Kippwinkel im Lager, z.B. in Nm/°, ergibt. Diese ist umso geringer, um so mehr das Lager bei Belastungen verkippt, d.h. umso größer der Kippwinkel bei gleicher Belastung ist. Die Belastungen sind die Belastungen, die im wesentlichen im Betriebszustand eines Fahrzeuges auf ein Fahrzeugrad und die dazugehörigen Radaufhängung wirken. Je geringer die Lagersteifigkeit, umso mehr bewirken die Belastungen Verkippungen des Radsystems, die sich nachteilig auf das Fahrverhalten des Fahrzeuges, insbesondere bei Kurvenfahrt, und nachteilig auf den Verschleiß der Bremse und die Funktion der Bremse auswirken.

Aus DE 31 16 720 C1 ist unter anderen eine Radlagereinheit offenbart, die eine Stirnverzahnung mit umfangsseitig zueinander beabstandeten Zähnen, die sich von einem Kreis aus mit der Zahnbreite weg nach innen erstrecken.

Aus DE 3636243 A1 ist eine Radlagereinheit bekannt, bei der die Radnabe und die Gelenkglocke mittels einer Paarung von miteinander korrespondierenden Stirnverzahnungen formschlüssig ineinandergreifen, um ein Antriebsmoment zu übertragen.

Aus DE 36 04 630 A1 geht hervor wie eine Stirnverzahnung mittels Taumelpressens wirtschaftlich hergestellt werden kann und wie eine Radnabe und eine Gelenkglocke mittels einer ineinandergreifender Paarung von Stirnverzahnungen formschlüssig miteinander verbindbar sind.

**Zusammenfassung der Erfindung**

Die Aufgabe der Erfindung ist es daher, eine steife Radlageranordnung zur Übertragung von hohen Momenten zu schaffen.

Die Aufgabe der Erfindung ist einerseits dadurch gelöst, dass zumindest an der radlageranordnungsseitigen Stirnverzahnung ein Verhältnis von Durchmesser (VTK) eines Verzahnungstellkreises zu der Zähnezahl (Z) der Stirnverzahnung mindestens 0,7 ist:

$$0,7 \leq (VTK/Z)$$

Vorzugsweise ist:

$$0,7 \leq (VTK/Z) \leq 1,4$$

Der Verzahnungsteilkreis (VTK) ist eine Differenz aus dem radialen Außendurchmesser (VDA) der Verzahnung und aus der Zahnbreite (ZB) der am weitesten radial nach außen ausgebildeten Zähne:

$$VTK = VDA - ZB$$

Der Außendurchmesser (VDA) ist ein gedachter, die Zähne der Verzahnung radial außen am Zahnfuß berührender Kreis um die Rotationsachse der Radlageranordnung. Die umfangsseitig zueinander beabstandeten Zähne erstrecken sich von dem Kreis aus mit der Zahnbreite (ZB) weg radial zur Rotationsachse oder auch schräg zu dieser ausgerichtet nach innen.

Der Außendurchmesser VDA der Verzahnung ist der Durchmesser eines gedachten Kreises der die am weitesten radial außen liegenden Zähne radial außen umgriffen sind. Demnach ist die Anwendung der Erfindung auch auf Verzahnungen anwendbar die Zähne unterschiedlicher Zahnbreite ZB aufweisen oder die mit radial zueinander versetzten Zähnen gleicher Zahnbreite ZB versehen ist. Die Zahnbreite ZB beschreibt den Abstand auf Höhe des Zahnfußes zwischen der radial äußeren Begrenzungsfläche und der radial inneren Begrenzungsfläche des jeweiligen Zahnes. Der Zahnfuß ist durch die Grenze/Konturlinie beschrieben an der der Zahn aus dem Material des Bauteiles, an dem die Verzahnung ausgebildet ist, hervorgeht bzw. in dieses übergeht. So verläuft diese Grenze in den Zahnlücken umfangsseitig benachbarter Zähne zwischen den radial tiefsten Punkten der Lücken und von der Lücke aus radial außen und radial innen des Zahnes zu der nächsten Zahnlücke. Die Zähnezahl Z ist die gesamte Anzahl der umfangsseitig zueinander, in der Regel mit gleichmäßiger Teilung, zueinander benachbarter Zähne der Verzahnung.

Alle mit der Erfindung betrachteten Abmessungen, Verhältnisse und Berechnungswerte geben Nennwerte ohne Berücksichtigung von fertigungsbedingten und anderen Abmessungstoleranzen wieder.

Die Erfindung betrifft in der Regel die Radlageranordnungen, bei denen die Radnabe und das Antriebselement miteinander verbindbar und wieder voneinander lösbar sind. In diesem "klassischen" Fall greifen die beiden Bauteile über die Stirnverzahnungen formschlüssig spielfrei ineinander und sind mit einer zentralen Schraube axial gegeneinander verspannt. Denkbar ist auch, dass die formschlüssige Verbindung mittels der Stirnverzahnungen stoffschlüssig oder auf andere Weise unlösbar gesichert ist. Dabei ist die Verbindung an den Verzahnungen in der Regel selbsthemmend ausgelegt.

Andererseits ist die Aufgabe auch dadurch gelöst, dass zumindest an einer Stirnverzahnung der Paarung der Durchmesser (TK) eines Teilkreises einer der Reihen Wälzkörper maximal mal so groß und kleiner ist wie das 1,7-fache des Durchmessers (VTK) eines Verzahnungsteilkreises dieser Stirnverzahnung:

$$TK \leq (1{,}7 \cdot VTK)$$

Der Teilkreis ist ein gedachter, zur Rotationsachse konzentrisch verlaufender Kreis, der die Rotationszentren der Wälzkörper umfangsseitig miteinander verbindet.

Mit einer Ausgestaltung der Erfindung ist vorgesehen, dass der Durchmesser (TK) eines Teilkreises zumindest einer der Reihen Wälzkörper mindestens vier mal so groß und größer ist wie der Durchmesser (DKU) der Wälzkörper gleicher Größe dieser Reihe:

$$TK \geq (4 \cdot DKU)$$

Der Teilkreis ist ein gedachter und zur Rotationsachse der Radlageranordnung konzentrischer Kreis, der die Zentren der Wälzkörper der betreffenden Reihe umfangsseitig miteinander verbindet.

Die Stirnverzahnung ist antriebsseitig beispielsweise an einem Gelenk - einer Gelenkglocke - oder an einem Wellenstummel ausgebildet. Seitens der Radlageranordnung ist die Stirnverzahnung an der Radnabe oder an einem auf der Radnabe sitzenden Innenring vorgesehen. Alternativ dazu ist die Stirnverzahnung an einem auch mit Wälznietbund bezeichneten Bund der Radnabe ausgebildet. Der Bund ist aus einem hohlen, vorzugsweise rotationssymmetrisch ausgebildeten Abschnitt eines Vormontagezustandes der Radnabe durch plastisches Umformen radial nach außen verformt. Mit dem Bund wird die Radlageranordnung in sich gehalten und aufgrund der Schräglageranordnung in der Regel auch axial verspannt. Der Abschnitt in seinem Ausgangszustand vor dem Umlegen des Bundes ist bevorzugt hohlzylindrisch oder außenzylindrisch und gleichzeitig innen innenkonusförmig oder beliebig anders gestaltet.

Dieser Bund wird nun im Sinne der Erfindung so gestaltet und mit einer Stirnverzahnung versehen, dass das Verhältnis $0{,}7 \leq (VTK/Z)$ realisiert ist. Weiter ist mit Ausgestaltungen der Erfindung vorgesehen, dass die Zahnbreite (ZB) mindestens so groß oder größer aber nicht mehr als 2,5 mal größer ist wie die radiale Wandstärke (SQ) an der radial schmalsten Stelle des hohlen Abschnittes radial unterhalb des Innenringes:

$$1 \leq (ZB / SQ) \leq 2{,}5$$

Eine weitere Ausgestaltung der Erfindung sieht vor, dass die Zahnbreite (ZB) höchstens zweimal so breit wie der Bund an seiner schmalsten Stelle - aber mindestens so breit wie der Bund axial an seiner schmalsten Stelle ist. Die Bundbreite NB erstreckt sich axial von einer Stirnseite des Innenringes aus axial: Die Zahnbreite ZB steht somit senkrecht zu Bundbreite NB.

$$2 \cdot NB \geq ZB \geq NB$$

Die Stirnseite des Innenringes ist eine in Richtung der Paarung gewandte Seite.

Weiter ist vorgesehen, dass der Bund an seiner schmalsten Stelle mit dem Maß NB axial mindestens 0,8 mal so breit ist wie die Dicke SQ der Wand:

$$NB \geq (0{,}8 \cdot SQ)$$

Alternativ ist vorgesehen, dass der Durchmesser (VTK) des Verzahnungsteilkreises mindestens sieben mal so groß ist wie der Bund an seiner schmalsten Stelle mit Maß NB axial breit ist:

$$VTK \geq (7 \cdot NB)$$

Weiter sind folgende Ausgestaltungen der Erfindung vorgesehen:

Der Durchmesser VTK des Verzahnungsteilkreises entspricht mindestens dem Innendurchmesser IRD des Innenringes oder ist größer als dieser.

$$VTK \geq IRD.$$

Die Abmessung IRB der Schulter des Innenringes vom Übergang Laufbahn zur zylindrischen Mantelfläche außen ist größer als die Breite NB des Bundes an seiner axial schmalsten Stelle:

$$IRB > NB.$$

Weitere Ausgestaltungen der Erfindungen sehen Kombinationen der vorgenannten Merkmale in beliebiger Zahl und Anordnung vor.

Mit einer Radlagereinheit nach der Erfindung ist eine schmale Radlagereinheit geschaffen, die jedoch durch einen großen Kugelteilkreis bedingt im Durchmesser groß und somit steif ausgebildet ist. Dadurch ist der Teilkreis der Verzahnung angehoben. Es lassen sich dadurch umfangsseitig mehr Zähne anordnen. Die Verzahnung ist durch höhere Antriebsmomente belastbar.

**Beschreibung der Zeichnung**

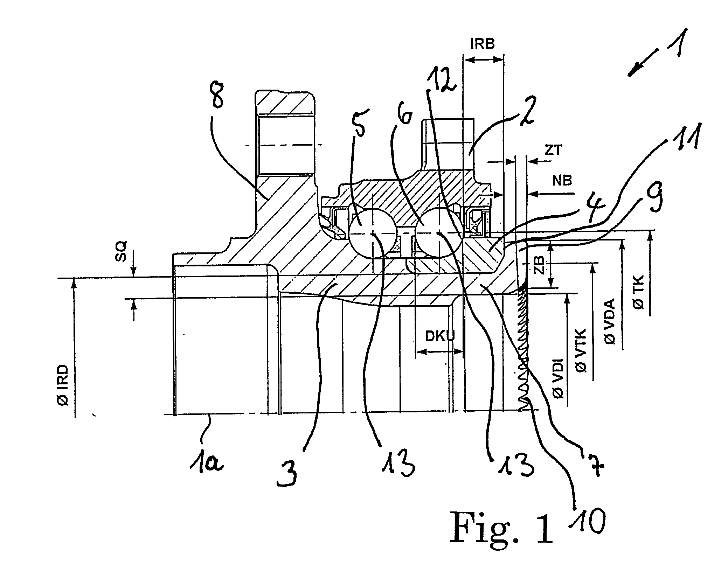

Figur 1 zeigt ein Ausführungsbeispiel der Erfindung. Die Radlageranordnung 1 ist aus einem fahrzeugseitigen Flansch 2, einer Radnabe 3 mit einem Radflansch 8, aus einem Innenring 4 und aus zwei Reihen 5, 6 Wälzkörpern gebildet. Die Kugeln 12 in diesem Fall beider der Reihen 5 und 6 sind mit dem Teilkreis vom Durchmesser TK um die Rotationsachse 1 a der Radiagereinheit 1 angeordnet. Der Teilkreis verläuft durch die Zentren 13 der Kugeln.

Der Innenring 4 sitzt auf einem hohlen Abschnitt 7 mit der Wandstärke SQ. Der Abschnitt 7 weist den Innendurchmesser VDI auf. Einteilig mit dem Abschnitt 7 der Radnabe 3 ist ein Bund 9 ausgebildet. Der Bund 9 geht radial von dem Abschnitt 7 ab und weist außen den Außendurchmesser VDA auf. Mit dem Bund 9 ist die Radlageranordnung 1, in diesem Fall eine Schrägkugellageranordnung, vorgespannt. Dazu liegt der Bund 9 axial an einer in Richtung Stirnverzahnung 10 gewandten Stirnseite 11 des Innenringes 4 an. Die Breite IRB der Schulter des Innenringes 4 ist durch den axialen Abstand zwischen der Stirnseite 11 und dem Übergang 12 zur Innenringlaufbahn beschrieben.

An dem Bund ist eine Stirnverzahnung 10 ausgebildet, die außen durch den Außendurchmesser VDA der Verzahnung 10 begrenzt ist. Die Stirnverzahnung ist für den Eingriff in eine entsprechend korrespondierende Stirnverzahnung des nicht dargestellten Antriebselementes vorgesehen. In diesem Ausführungsbeispiel ist somit der Außendurchmesser der Stirnverzahnung 10 gleich groß dem Außendurchmesser des Bundes 9. Denkbar sind auch Ausführungen, bei denen der Außendurchmesser des Bundes größer ist als der Außendurchmesser der Stirnverzahnung. Die Geometrie der Stirnverzahnung ist durch den Außendurchmesser VDA und die Zahnbreite ZB bestimmt, so dass sich der Durchmesser VTK des Teilkreises der Stirnverzahnung 10 ergibt. Die axial gerichtete Zahntiefe ZT ist auch durch die axiale Breite NB des Bundes 9 bestimmt.

**Bezugszeichen**

| 1 | Radlageranordnung |
|---|---|
| 1a | Rotationsachse |
| 2 | Flansch |
| 3 | Radnabe |
| 4 | Innenring |
| 5 | Reihe |
| 6 | Reihe |
| 7 | Abschnitt |
| 8 | Radflansch |
| 9 | Bund |
| 10 | Stirnverzahnung |
| 11 | Stirnseite |
| 12 | Übergang |
| 13 | Zentrum |

**Patentansprüche**

1. Radlageranordnung (1) mit wenigstens zwei Reihen (5, 6) Wälzkörpern zur Lagerung einer mit der Radlageranordnung (1) und mit einem auf einer durch ein Antriebselement antreibbaren Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, wobei die Radnabe (3) mit dem Antriebselement verbunden ist, und wobei die Radnabe (3) und das Antriebselement mittels einer Paarung von miteinander korrespondierenden Stirnverzahnungen (10) formschlüssig ineinander greifen, wobei zumindest an einer Stirnverzahnung (10) der Paarung ein Verhältnis von Durchmesser (VTK) eines Verzahnungsteilkreises dieser Stirnverzahnung (10) zu der Zähnezahl (Z) dieser Stirnverzahnung (10) mindestens dem Zahlenwert 0,7 entspricht, wobei der Durchmesser (VTK) eine Differenz aus dem radialen Außendurchmesser (VDA) der Stirnverzahnung (10) und aus der Zahnbreite (ZB) der Zähne ist und wobei mit dem Außendurchmesser (VDA) ein gedachter, Zähne dieser Stirnverzahnung (10) radial außen am Zahnfuß berührender Kreis um die Rotationsachse (1a) der Radlageranordnung (1) beschrieben ist, und dabei sich die umfangsseitig zueinander beabstandeten Zähne von dem Kreis aus mit der Zahnbreite (ZB) weg nach innen erstrecken, **dadurch gekennzeichnet, dass** der Durchmesser (VTK) des Verzahnunasteilkreises mindestens sieben mal so groß ist wie der Bund_(9) an seiner schmalsten Stelle, axial von einer Stirnseite (11) des Innenringes aus betrachtet, axial breit ist.

2. Radlagerandordnung nach Anspruch 1, **dadurch gekennzeichnet, dass** das Verhältnis von Durchmesser (VTK) des Verzahnungsteilkreises der Stirnverzahnung (10) zu der Zähnezahl (Z) der Stirnverzahnung (10) nicht größer als der Zahlenwert 1,4 ist.

3. Radlageranordnung nach Anspruch 1, **dadurch gekennzeichnet, dass** der Durchmesser (TK) eines Teilkreises zumindest einer der Reihen (5, 6) Wälzkörper mindestens vier mal so groß ist wie der Durchmesser (DKU) der Wälzkörper gleicher Größe dieser Reihe (5, 6), wobei der Teilkreis ein gedachter und zur Rotationsachse (1 a) der Radlageranordnung (1) konzentrischer Kreis ist, der die Zentren (13) der Wälzkörper der Reihe (5, 6) umfangsseitig miteinander verbindet.

4. Radlageranordnung nach Anspruch 1 mit einem auf der Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, **dadurch gekennzeichnet, dass** die Zahnbreite (ZB) mindestens so groß ist wie die radiale Wandstärke (SQ) an der radial schmalsten Stelle des Abschnittes (7) radial unterhalb des Innenringes.

5. Radlageranordnung nach Anspruch 4, **dadurch gekennzeichnet, dass** die Zahnbreite (ZB) höchstens dem 2,5 fachen der Wandstärke (SQ) entspricht.

6. Radlageranordnung nach Anspruch 1, **dadurch gekennzeichnet, dass** der Durchmesser (TK) des Teilkreises zumindest einer der Reihen (5, 6) Wälzkörper höchstens so groß ist wie das 1,7-flache des Durchmessers (VTK) des Verzahnungsteilkreises der Stirnverzahnung (10) der Paarung, wobei der Teilkreis (TK) ein gedachter sowie zur Rotationsachse (1a) konzentrisch verlaufender Kreis ist und die Zentren (13) der Wälzkörper umfangsseitig miteinander verbindet.

7. Radlageranordnung nach Anspruch 1 mit einem auf der Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, **dadurch gekennzeichnet, dass** die breiteste Zahnbreite (ZB) der Verzahnung höchstens das 2-fache der schmalsten axialen Bundbreite (BN) des Bundes (9) ist, wobei die Bundbreite (BN) axial von einer Stirnseite (11) des Innenringes aus in axiale Richtung betrachtet ist.

8. Radlageranordnung nach Anspruch 6, **dadurch gekennzeichnet, dass** die Zahnbreite (ZB) mindestens so breit ist wie die Bundbreite (BN) des Bundes (9) axial an der schmalsten Stelle.

9. Radlageranordnung nach Anspruch 1 mit einem auf der Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, **dadurch gekennzeichnet, dass** der Bund (9) an seiner schmalsten Stelle axial von einer Stirnseite (11) des Innenringes aus axial mindestens 0,8 mal so breit ist wie die Wand des Abschnittes (7) radial unterhalb des Innenringes an der radial schmalsten Stelle dick ist.

## Claims

1. Wheel bearing arrangement (1) having at least two rows (5, 6) of rolling bodies for mounting a wheel hub (3) with the wheel bearing arrangement (1) and with an inner ring which is seated on the wheel hub (3) which can be driven by a drive element for one of the rows (5,6), the inner ring being held at least axially on the wheel hub (3) by means of a collar (9) which is shaped radially to the outside from a hollow section of the wheel hub (3), the wheel hub (3) being connected to the drive element, and the wheel hub (3) and the drive element engaging into one another in a form-fitting manner by means of a pair of spur toothing systems (10) which correspond to one another, at least on one spur toothing system (10) of the pair, a ratio of the diameter (VTK) of a toothing pitch circle of said spur toothing system (10) with respect to the tooth number (Z) of said spur toothing system (10) corresponding at least to the value 0.7, the diameter (VTK) being a difference from the radial external diameter (VDA) of the spur toothing system (10) and from the tooth width (ZB) of the teeth, and an imaginary circle which touches teeth of said spur toothing system (10) radially on the outside at the tooth root being described about the rotational axis (1a) of the wheel bearing arrangement (1) with the external diameter (VDA), and the teeth which are spaced apart circumferentially with respect to one another extending here away from the circle with the tooth width (ZB) to the inside, **characterized in that** the diameter (VTK) of the toothing pitch circle is at least seven times as great as the collar (9) is axially wide at its narrowest point, as viewed axially from an end side (11) of the inner ring.

2. Wheel bearing arrangement according to Claim 1, **characterized in that** the ratio of the diameter (VTK) of the toothing pitch circle of the spur toothing system (10) with respect to the tooth number (Z) of the spur toothing system (10) is not greater than the value 1.4.

3. Wheel bearing arrangement according to Claim 1, **characterized in that** the diameter (TK) of a pitch circle of at least one of the rows (5, 6) of rolling bodies is at least four times as great as the diameter (DKU) of the rolling bodies of identical size of said row (5, 6), the pitch circle being an imaginary circle which is concentric with respect to the rotational axis (1a) of the wheel bearing arrangement (1) and connects the centers (13) of the rolling bodies of the row (5, 6) to one another circumferentially.

4. Wheel bearing arrangement according to Claim 1, having an inner ring which is seated on the wheel hub (3) for one of the rows (5, 6), the inner ring being held at least axially on the wheel hub (3) by means of a collar (9) which is shaped radially to the outside from a hollow section of the wheel hub (3), **characterized in that** the tooth width (ZB) is at least as great as the radial wall thickness (SQ) at the radially narrowest point of the section (7) radially below the inner ring.

5. Wheel bearing arrangement according to Claim 4, **characterized in that** the tooth width (ZB) corresponds at most to 2.5 times the wall thickness (SQ).

6. Wheel bearing arrangement according to Claim 1, **characterized in that** the diameter (TK) of the pitch circle of at least one of the rows (5, 6) of rolling bodies is at most as great as 1.7 times the diameter (VTK) of the toothing pitch circle of the spur toothing system (10) of the pair, the pitch circle (TK) being an imaginary circle which extends concentrically with respect to the rotational axis (1a) and connecting the centers (13) of the rolling bodies to one another circumferentially.

7. Wheel bearing arrangement according to Claim 1, having an inner ring which is seated on the wheel hub (3) for one of the rows (5, 6), the inner ring being held at least axially on the wheel hub (3) by means of a collar (9) which is shaped radially to the outside from a hollow section of the wheel hub (3), **characterized in that** the widest tooth width (ZB) of the toothing system is at most twice the narrowest axial collar width (BN) of the collar (9), the collar width (BN) being viewed in the axial direction, axially from an end side (11) of the inner ring.

8. Wheel bearing arrangement according to Claim 6, **characterized in that** the tooth width (ZB) is at least as wide as the collar width (BN) of the collar (9), axially at the narrowest point.

9. Wheel bearing arrangement according to Claim 1, having an inner ring which is seated on the wheel hub (3) for one of the rows (5, 6), the inner ring being held at least axially on the wheel hub (3) by means of a collar (9) which is shaped radially to the outside from a hollow section of the wheel hub (3), **characterized in that**, at its narrowest point, the collar (9) is axially at least 0.8 times as wide, axially from an end side (11) of the inner ring, as the wall of the section (7) is thick, radially below the inner ring at the radially narrowest point.

## Revendications

1. Agencement de palier de roue (1) comprenant au moins deux rangées (5, 6) de corps de roulement pour le support sur palier d'un moyeu de roue (3) avec l'agencement de palier de roue (1) et avec une bague interne reposant sur le moyeu de roue (3) pouvant être entraîné par un élément d'entraînement pour l'une des rangées (5, 6), la bague interne étant au moins maintenue axialement sur le moyeu de roue (3) au moyen d'un épaulement (9) formé radialement vers l'extérieur à partir d'une portion creuse du moyeu de roue (3), le moyeu de roue (3) étant connecté à l'élément d'entraînement, et le moyeu de roue (3) et l'élément d'entraînement venant en prise l'un dans l'autre par engagement par correspondance géométrique au moyen d'un appariement de dentures droites (10) se correspondant mutuellement, un rapport de diamètre (VTK) d'un cercle partiel de denture de cette denture droite (10) au nombre de dents (Z) de cette denture droite (10) correspondant au moins à la valeur en nombre 0,7 au moins pour une denture droite (10) de l'appariement, le diamètre (VTK) étant une différence entre le diamètre extérieur radial (VDA) de la denture droite (10) et la largeur de dent (ZB) des dents, et un cercle imaginaire venant en contact avec des dents de cette denture droite (10) radialement à l'extérieur à la base des dents étant décrit avec le diamètre extérieur (VDA) autour de l'axe de rotation (1a) de l'agencement de palier de roue (1), et en l'occurrence les dents espacées les unes des autres sur la périphérie s'étendant depuis le cercle vers l'intérieur avec la largeur de dent (ZB) **caractérisé en ce que** le diamètre (VTK) du cercle partiel de denture est au moins sept fois plus grand que la largeur axiale de l'épaulement (9) à son emplacement le plus étroit, considéré axialement depuis un côté frontal (11) de la bague interne.

2. Agencement de palier de roue selon la revendication 1, **caractérisé en ce que** le rapport du diamètre (VTK) du cercle partiel de denture de la denture droite (10) au nombre de dents (Z) de la denture droite (10) n'est pas supérieur à la valeur en nombre 1,4.

3. Agencement de palier de roue selon la revendication 1, **caractérisé en ce que** le diamètre (TK) d'un cercle partiel d'au moins l'une des rangées (5, 6) de corps de roulement est au moins quatre fois plus grand que le diamètre (DKU) des corps de roulement de même taille de cette rangée (5, 6), le cercle partiel étant un cercle imaginaire concentrique à l'axe de rotation (1a) de l'agencement de palier de roue (1), qui relie entre eux les centres (13) des corps de roulement de la rangée (5,6) sur la périphérie.

4. Agencement de palier de roue selon la revendication 1, comprenant une bague interne reposant sur le moyeu de roue (3) pour l'une des rangées (5, 6), la bague interne étant maintenue au moins axialement sur le moyeu de roue (3) au moyen d'un épaulement (9) formé radialement vers l'extérieur à partir d'une portion creuse du moyeu de roue (3), **caractérisé en ce que** la largeur de dent (ZB) est au moins aussi grande que l'épaisseur de paroi radiale (SQ) au niveau de l'emplacement le plus étroit radialement de la portion (7) radialement en dessous de la bague interne.

5. Agencement de palier de roue selon la revendication 4, **caractérisé en ce que** la largeur de dent (ZB) correspond au maximum à 2,5 fois l'épaisseur de paroi (SQ).

6. Agencement de palier de roue selon la revendication 1, **caractérisé en ce que** le diamètre (TK) du cercle partiel d'au moins l'une des rangées (5, 6) de corps de roulement est au maximum 1,7 fois plus grand que le diamètre (VTK) du cercle partiel de denture de la denture droite (10) de l'appariement, le cercle partiel (TK) étant un cercle imaginaire s'étendant concentriquement à l'axe de rotation (1a) et reliant les uns aux autres les centres (13) des corps de roulement sur la périphérie.

7. Agencement de palier de roue selon la revendication 1, comprenant une bague interne reposant sur le moyeu de roue (3) pour l'une des rangées (5, 6), la bague interne étant maintenue au moins axialement sur le moyeu de roue (3) au moyen d'un épaulement (9) formé radialement vers l'extérieur à partir d'une portion creuse du moyeu de roue (3), **caractérisé en ce que** la largeur de dent (ZB) la plus large de la denture est au maximum 2 fois la largeur d'épaulement axial la plus étroite (BN) de l'épaulement (9), la largeur d'épaulement (BN) étant considérée axialement depuis un côté frontal (11) de la bague interne dans la direction axiale.

8. Agencement de palier de roue selon la revendication 6, **caractérisé en ce que** la largeur de dent (ZB) est au moins aussi large que la largeur d'épaulement (BN) de l'épaulement (9) axialement au niveau de l'emplacement le plus étroit.

9. Agencement de palier de roue selon la revendication 1, comprenant une bague interne reposant sur le moyeu de roue (3) pour l'une des rangées (5, 6), la bague interne étant maintenue au moins axialement sur le moyeu de roue (3) au moyen d'un épaulement (9) formé radialement vers l'extérieur à partir d'une portion creuse du moyeu de roue (3), **caractérisé en ce que** l'épaulement (9) à son emplacement le plus étroit axialement depuis un côté frontal (11) de la bague interne est axialement au moins 0,8 fois aussi large que l'épaisseur de la paroi de la portion (7) radialement en dessous de la bague interne au niveau de l'emplacement le plus étroit radialement.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3116720 C1
- DE 3636243 A1
- DE 3604630 A1